# EUROPÄISCHE PATENTANMELDUNG

(11) **EP 2 657 559 A1**
(43) Veröffentlichungstag der Anmeldung: **30.10.2013**
(21) Anmeldenummer: 13161121.2
(22) Anmeldetag: 26.03.2013
(51) Int. Cl.: F16D 23/14

(54) **Anlaufteller für eine Reibungskupplung**

(30) Priorität: 24.04.2012 DE 102012206718
(71) Anmelder: ZF Friedrichshafen AG, 88038 Friedrichshafen (DE)
(72) Erfinder: Bartha, Alexander, 97082 Würzburg (DE); Joa, Dominik, 97450 Arnstein (DE); Kühner, Michael, 74078 Heilbronn (DE); Berck, Rüdiger, 63303 Dreieich (DE); Vogt, Sebastian, 97616 Bad Neustadt (DE)

(57) **Zusammenfassung**

Offenbart wird ein Anlaufteller (12) für eine gedrückte Reibungskupplung (1) zum Überbrücken eines Anlaufdurchmesserunterschieds zwischen einer Membranfederzungen (10) aufweisenden Membranfeder (4) einer Reibungskupplung (1) und einem auf die Membranfederzungen (10) drückend einwirkenden Kupplungsbetätigungselement, an dem mindestens ein erstes und ein zweites Befestigungselement (14; 20) angeordnet sind, die dazu ausgelegt sind, den Anlaufteller (12) verliersicher an der Membranfeder (4) festzulegen, wobei das erste und das zweite Befestigungselement (14; 20) dazu ausgelegt sind, mindestens eine erste und eine zweite Membranfederzunge (10) der Membranfeder (4) an ihrem radial inneren Rand zu umgreifen, und sich hinter den Membranfederzunge (10) von radial innen nach radial außen zu erstrecken, sowie eine Membranfeder-Anlaufteller-Baueinheit und eine Reibungskupplung mit einem solchen Anlaufteller, und ein Verfahren zum Fertigen einer derartigen Reibungskupplung.

## Beschreibung

Vorliegende Erfindung betrifft einen Anlaufteller für eine gedrückte Reibungskupplung zum Überbrücken eines Anlaufdurchmesserunterschieds zwischen einer Membranfederzungen aufweisenden Membranfeder und einem auf die Membranfederzungen drückend einwirkendes Kupplungsbetätigungselement, eine Membranfeder-Anlaufteller-Baueinheit, eine Reibungskupplung mit einem derartigen Anlaufteller, sowie ein Verfahren zum Herstellen einer derartigen Reibungskupplung.

Reibungskupplungen weisen im Allgemeinen zum Betätigen einer Anpressplatte eine Membranfeder auf, die an ihrem radial äußeren Rand mit einer der Anpressplatte in Wirkverbindung steht und an ihrem radial inneren Rand Membranfederzungen aufweist. Um die Reibungskupplung zu betätigen, insbesondere um die Reibungskupplung zu lösen, ist weiterhin ein Kupplungsbetätigungselement vorgesehen, das dazu ausgelegt ist, auf die Membranfederzungen der Membranfeder drückend oder ziehend einzuwirken, wodurch die Membranfeder die Anpressplatte bewegt. Dabei kann die Anpressplatte bei Betätigung des Betätigungselements entweder die Kupplung schließen (normal offene Kupplung) oder, wie häufiger, die Reibungskupplung lösen (normal geschlossene Kupplung).

Um mit dem Betätigungselement die Membranfederzungen zu betätigen, weist die Membranfeder an ihren Membranfederzungen und das Kupplungsbetätigungselement einen sogenannten Anlauf auf. Um auf diesen Anlauf einzuwirken ist der Anlauf der Membranfeder an die Dimension des Kupplungsbetätigungselements angepasst sein. Alternativ kann jedoch der Membranfederanlauf auch losgelöst vom Anlauf des Betätigungselements größer gewählt werden, wodurch vorteilhafterweise eine günstigere Übersetzung zum Betätigen der Druckplatte gewählt werden kann. Um dem Anlaufdurchmesserunterschied gerecht zu werden, ist im Stand der Technik ein sogenannter Anlaufteller vorgeschlagen worden, der an der Membranfeder oder an dem Ausrücker verliersicher befestigbar ist und den Anlaufdurchmesserunterschied überbrückt. Ein derartiger Anlaufteller kann, wie beispielsweise in der DE 3516292 oder DE 102005024749 beschrieben, zwischen zwei benachbarten Membranfederzungen eingeklipst werden.

Nachteilig in diesem Stand der Technik ist jedoch, dass der Einklipsmechnismus zu einem ungewollten Verklemmen der Membranfederzungen an dem Anlaufteller führen kann, was in einer Funktionsstörung der Reibungskupplung resultiert.

Aufgabe vorliegender Erfindung ist es deshalb, einen Anlaufteller für eine Reibungskupplung bereitzustellen, der einfach zu montieren ist und der eine klemmfreie Beweglichkeit der Membranfederzungen relativ zu dem Anlaufteller gewährleistet.

Diese Aufgabe wird gelöst durch einen Anlaufteller gemäß Patentanspruch 1, eine Membranfeder-Anlaufteller-Baueinheit gemäß Patentanspruch 12, eine Reibungskupplung gemäß Patentanspruch 13, sowie ein Verfahren zum Herstellen einer derartigen Reibungskupplung gemäß Patentanspruch 15.

Erfindungsgemäß wird ein Anlaufteller für eine gedrückte Reibungskupplung zum Überbrücken eines Anlaufdurchmesserunterschieds zwischen einer Membranfederzungen aufweisenden Membranfeder einer Reibungskupplung und einem auf die Membranfederzungen drückend einwirkenden Kupplungsbetätigungselement vorgeschlagen, an dem mindestens ein erstes und ein zweites Befestigungselement angeordnet sind, die dazu ausgelegt sind, den Anlaufteller verliersicher an der Membranfeder festzulegen. Dabei basiert die Erfindung auf der Idee, das erste und das zweite Befestigungselement derart auszulegen, dass mindestens eine erste und eine zweite Membranfederzunge der Membranfeder an ihrem radial inneren Rand hintergriffen werden, wobei sich die Befestigungselemente hinter den Membranfederzungen von radial innen nach radial außen erstrecken.

Erfindungsgemäß wurde erkannt, dass bei Betätigung der Membranfeder, also bei Druckausübung auf die Membranfederzungen, ein zwischen den Membranfederzungen vorhandener Schlitz sich verkleinert, was bei den bekannten Anlauftellern zu einem Verklemmen der Membranfederzungen an den zwischen den Membranfederzungen angeordneten aus dem Stand der Technik bekannten Befestigungselementen führen kann. Da erfindungsgemäß die Befestigungselemente aber nicht mehr zwischen den Membranfederzungen, sondern von radial innen hinter die Membranfederzungen greifen, kann bei Betätigung und dem dadurch verursachten Verkleinerung der Membranfederschlitze das Verklemmen der Membranfederzungen an den Befestigungselementen zuverlässig verhindert werden. Des Weiteren bietet die radial innere Umgreifung der Membranfederzungen einen sicheren Halt des Anlauftellers.

Gemäß einem weiteren vorteilhaften Ausführungsbeispiel ist ein, zwischen der radial äußersten Erstreckung des ersten Befestigungselements und der radial äußersten Erstreckung des zweiten Befestigungselements definierter, Außendurchmesser dazu ausgelegt, kleiner oder gleich einem durch die radial inneren Enden der Membranfederzungen definierten Innendurchmessers der Membranfeder im entspannten Zustand zu sein. Dadurch kann der Anlaufteller im entspannten Zustand, also im nicht eingebauten Zustand, der Membranfeder durch die innere Öffnung der Membranfeder geschoben werden. Wird nun die Membranfeder an der Reibungskupplung unter Vorspannung befestigt, verringert sich der Innendurchmesser der Membranfeder. Sind die ersten und zweiten Befestigungselemente entsprechend dimensioniert, bedeutet dies, dass die Befestigungselemente im eingebauten Zustand die Membranfederzungen hintergreifen, wodurch der Anlaufteller verliersicher mit der Membranfeder verbunden werden kann. Die derartige Ausgestaltung hat den Vorteil, dass für die Montage des Anlauftellers kein weiterer Schritt erforderlich ist und keine zusätzlichen Befestigungselemente vorgesehen werden müssen, die wiederum Funktionsstörungen hervorrufen könnten.

Gemäß einem weiteren vorteilhaften Ausführungsbeispiel weist der Anlaufteller weiterhin eine Anlaufscheibe auf, die den Anlauf für den Ausrücker darstellt und damit einen auf einen Durchmesser des Kupplungsbetätigungselements dimensionierten Innendurchmesser und einen auf einen Durchmesser der Membranfeder definierten Außendurchmesser aufweist, wobei die Anlaufscheibe die Befestigungselemente trägt. Vorteilhafterweise stellt die Anlaufscheibe radial innen eine ebene Anlauffläche für den Kupplungsbetätigungsmechanismus bereit, und kontaktiert an ihrem radial äußeren Bereich die Membranfederzungen. Dadurch wird in vorteilhafter Weise der Anlaufdurchmesserunterschied überbrückt.

Gemäß einem weiteren vorteilhaften Ausführungsbeispiel weist die Anlaufscheibe weiterhin mindestens eine Verdrehsicherung zum verdrehsicheren Montieren des Anlauftellers an der Membranfeder auf. Dadurch kann Reibungswärme, die bei einer Relativbewegung zwischen Anlaufteller und Membranfeder entstehen kann, reduziert werden.

Vorteilhafterweise sind dabei die Verdrehsicherungen als mindestens ein Zapfenelement ausgebildet, das zwischen zwei Membranfederzungen aufgenommen werden kann. Dadurch kann eine einfache und sichere Verdrehsicherung bereitgestellt werden. Bevorzugt ist dabei, wenn die Zapfenelemente radial außen an der Anlaufscheibe angeordnet sind.

Gemäß einem weiteren vorteilhaften Ausführungsbeispiel steht mindestens eines der Befestigungselement mit zwei Verdrehsicherungen derart in Wirkverbindung, dass ein, mindesten eine Membranfederzunge aufnehmende, Tasche ausgebildet ist. Dabei sind die Verdrehsicherungen vorzugsweise als Trennstege ausgebildet, die in die Schlitze der Membranfederzungen eingreifen, während das Befestigungselement deckelartig die Tasche abschließt.

Gemäß einem weiteren vorteilhaften Ausführungsbeispiel sind die Befestigungselemente und/oder die Verdrehsicherungen umfänglich gleich verteilt angeordnet. Dies hat den Vorteil, dass dadurch die auf die Befestigungselemente bzw. Verdrehsicherungen wirkenden Kräfte gleichmäßig verteilt sind, so dass alle Befestigungselemente/Verdrehsicherungen gleich dimensioniert werden können.

Selbstverständlich ist ebenfalls möglich, eines der Verdrehsicherungen bzw. Befestigungselemente derart auszugestalten, dass sich automatisch eine eindeutige Lage an der Membranfeder ergibt. Dies kann beispielsweise dadurch erreicht werden, dass eine der Verdrehsicherungen als breiteres Element ausgebildet ist, das in nur eine speziell verbreiterte Aufnahme zwischen zwei Membranfederzungen eintaucht. Dadurch kann eine einfache aber sichere und selbsterklärende Montagesicherung bereitgestellt werden, die für einen korrekten Einbau von Membranfeder und Anlaufteller sorgt.

Gemäß einem weiteren vorteilhaften Ausführungsbeispiel ist das erste und das zweite Befestigungselement integral als eine umlaufende rinnenförmige Ringaufnahme ausgebildet. Wird insbesondere der Anlaufteller aus Kunststoff gefertigt, stellt die rinnenförmige Ringaufnahme und die einstückige Ausgestaltung eine hohe konstruktionelle Festigkeit dar, wodurch Abscherungen der einzelnen Befestigungselemente aufgrund der wirkenden Drehkräfte vermieden werden können. Vorzugsweise ist dabei die Rinne der Ringaufnahme dazu ausgelegt, die Membranfederzungen, insbesondere die Enden der Membranfederzungen aufzunehmen, sobald die Membranfeder in einem vorgespannten Zustand an der Reibungskupplung befestigt ist.

Gemäß einem weiteren vorteilhaften Ausführungsbeispiel weist dabei die Ringaufnahme mindestens ein Trennelement auf, das dazu ausgelegt ist, als Verdrehsicherung zwischen zwei Membranfederzungen aufgenommen zu sein. Die derart ausgestaltete Verdrehsicherung weist die oben genannten Vorteile auf.

Gemäß einem weiteren vorteilhaften Ausführungsbeispiel sind mindestens zwei Trennelement vorgesehen, die mindestens eine zur Aufnahme einer Membranfederzunge ausgebildete Tasche ausbilden. Dabei kann diese Tasche ebenfalls als Montagesicherung ausgestaltet sein, so dass eine eindeutige Lage des Anlauftellers zu der Membranfeder gewährleistet sein kann. Um die Krafteinwirkung auf die Membranfederzungen jedoch gleichmäßig zu verteilen, ist vorteilhafterweise die Ringaufnahme mit mehreren, vorteilhafterweise gleichmäßig über den Umfang verteilten Taschen ausgebildet, wobei vorzugsweise für jede Membranfederzunge eine Tasche vorgesehen sein kann.

Ein weiterer Aspekt der vorliegenden Erfindung betrifft eine Membranfeder-Anlaufteller-Baueinheit mit einer Membranfeder und einem daran angeordneten Anlaufteller, die als vorgefertigte Baueinheit an einer Reibungskupplung anbringbar ist und wobei dadurch eine verliersichere Befestigung des Anlauftellers ermöglicht wird. Dabei kommt insbesondere ein oben beschriebener Anlaufteller zum Einsatz.

Ein weiterer Aspekt vorliegender Erfindung betrifft eine Reibungskupplung, insbesondere für ein Kraftfahrzeug, mit einer Membranfeder mit mehreren Membranfederzungen, die dazu ausgelegt ist, durch Druck auf die Membranfederzungen die Reibungskupplung auszurücken. Des Weiteren umfasst die Reibungskupplung ein Kupplungsbetätigungselement, das dazu ausgelegt ist, genannten Druck auf die Membranfederzungen auszuüben. Dabei ist der Innendurchmesser der Membranfeder größer als der Außendurchmesser des Kupplungsbetätigungselements und zur Überbrückung des Durchmesserunterschieds ist ein oben beschriebener Anlaufteller zwischen der Membranfeder und dem Kupplungsbetätigungselement angeordnet. Des Weiteren kann auch eine vorgefertigte Membranfeder-Anlaufteller-Baueinheit statt der Einzelelemente vorgesehen sein.

Eine derartige Reibungskupplung hat den großen Vorteil, dass die Kraftverteilung auf die Anpressplatte aufgrund des größeren Durchmessers der Membranfeder verbessert werden kann, während trotzdem das Kupplungsbetätigungselement klein dimensioniert bleiben kann. Durch die oben beschriebene erfindungsgemäße Ausgestaltung des Anlauftellers ist dabei eine einfache und verliersichere Montage und Befestigung des Anlauftellers an der Membranfeder gegeben, die zudem zuverlässig ein Verklemmen der Membranfederzungen an dem Anlaufteller verhindert.

Gemäß einem weiteren vorteilhaften Ausführungsbeispiel hintergreift das erste und das zweite Befestigungselement bzw. die rinnenförmige Ringaufnahme in Betätigungsrichtung des Kupplungsbetätigungselements die Membranfederzungen. Der Druck zum Auslösen der Reibungskupplung wird jedoch durch die Anlaufscheibe ausgeübt, die sich radial von dem Innendurchmesser des Kupplungsbetätigungselements auf den Außendurchmesser, der durch den Innendurchmesser der Membranfederzungen definiert ist, erstreckt.

Ein weiterer vorteilhafter Aspekt vorliegender Erfindung betrifft ein Verfahren zum Fertigen einer oben beschriebenen Reibungskupplung, wobei bei der Montage der Schritt des Anbringens des Anlauftellers an der Membranfeder vor dem Schritt des Anbringens der Membranfeder an der Reibungskupplung erfolgt. Dadurch kann der Anlaufteller einfach durch den Innendurchmesser der Membranfederzungen im entspannten Zustand durchgeführt werden, während die Membranfederzungen im montierten und damit vorgespannten Zustand einen verkleinerten Innendurchmesser aufweisen. Dabei ist die Aufnahme des ersten bzw. zweiten Befestigungselements oder der Ringaufnahme derart dimensioniert, dass der verkleinerte Innendurchmesser der Membranfederzungen in die Aufnahmen eintaucht, so dass der Anlaufteller verliersicher an der Membranfeder festgelegt ist.

Vorteilhafterweise wird dabei eine vorgefertigte Membranfeder-Anlaufteller-Baueinheit für den Einbau an der Reibungskupplung verwendet. Dadurch wird mit einem Arbeitsschritt nicht nur die Membranfeder, sondern auch der Anlaufteller an der Reibungskupplung montiert, wodurch eine Zeitersparnis gewonnen wird.

Weitere Vorteile und vorteilhafte Ausführungsformen sind in den Ansprüchen, der Beschreibung und den Zeichnungen definiert.

Im Folgenden soll die Erfindung anhand von in den Figuren dargestellten Ausführungsbeispielen näher beschrieben werden. Dabei sind die Ausführungsbeispiele rein exemplarischer Natur und sollen nicht den Rahmen der Erfindung festlegen. Dieser wird allein durch die anhängigen Ansprüche definiert.

Es zeigen:
Figur 1 eine schematische Schnittansicht durch einen Teilbereich einer erfindungsgemäßen Reibungskupplung;
Figur 2 einen vergrößerten Ausschnitt des in Figur 1 dargestellten Ausführungsbeispiels;
Figur 3 ein erstes Ausführungsbeispiel eines erfindungsgemäßen Anlauftellers;
Figur 4 ein zweites Ausführungsbeispiel des erfindungsgemäßen Anlauftellers;
Figur 5a eine schematische Schnittdarstellung durch eine erfindungsgemäße Membranfeder im entspannten Zustand mit erfindungsgemäßem Anlaufteller;
Figur 5b eine vergrößerte Ansicht eines Details aus Figur 5a;
Figur 6a eine schematische Schnittdarstellung durch eine erfindungsgemäße Membranfeder-Anlaufteller-Baueinheit im entspannten Zustand;
Figur 6b eine vergrößerte Ansicht eines Details aus Figur 6a;
Figur 7a eine schematische Schnittdarstellung durch eine erfindungsgemäße Membranfeder mit erfindungsgemäßem Anlaufteller im eingebauten, vorgespannten Zustand;
Figur 7b eine vergrößerte Ansicht eines Details aus Figur 7a;
Figur 8 ein drittes Ausführungsbeispiel des erfindungsgemäßen Anlauftellers;
Figur 9 ein viertes Ausführungsbeispiel des erfindungsgemäßen Anlauftellers.

Im Folgenden werden gleiche bzw. gleichwirkende Elemente mit denselben Bezugszeichen gekennzeichnet.

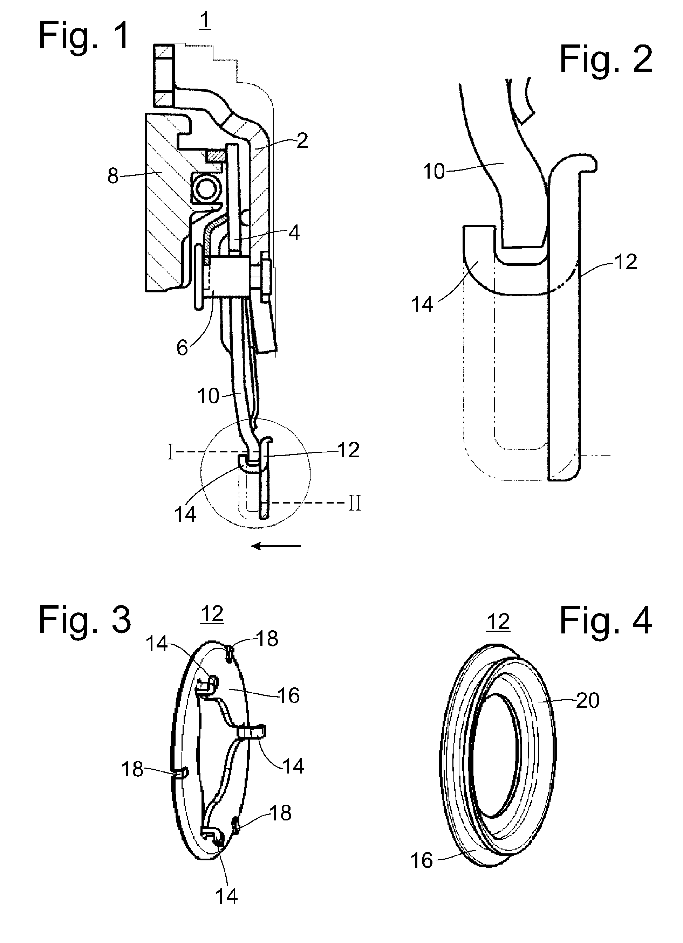

Figur 1 zeigt eine schematische Schnittansicht durch einen Teil einer Reibungskupplung 1 mit einem Gehäuse 2, an dem eine Membranfeder 4 mittels eines Bolzenelements 6 drehfest befestigt ist. Des Weiteren ist die Membranfeder 4 mit einer Anpressplatte 8 verbunden, die auf nicht dargestellte Reibflächen der Reibungskupplung einwirkt, um eine Drehmomentübertragung bereitzustellen.

Wie Figur 1 zu entnehmen ist, wirkt weiterhin die Membranfeder 4 auf die Anpressplatte 8, wobei in dem hier dargestellten Ausführungsbeispiel eine gedrückte Reibungskupplung dargestellt ist. Bei einer gedrückten Reibungskupplung 1 wird zum Betätigen der Anpressplatte 8 ein Druck auf radial innenliegende Membranfederzungen 10 der Membranfeder 4 ausgeübt (siehe Pfeil). Der zum Ausüben der Druckkraft nötige Ausrücker (nicht dargestellt) muss dafür entweder derart dimensioniert sein, dass er auf einen Anlauf I der Membranfeder 4 einwirken kann. Ist der Anlauf des Kupplungsbetätigungselements jedoch kleiner, beispielsweise durch die gestrichelte Linie bei II gegeben, wird ein Anlaufteller 12 an der Membranfeder 4 bzw. genauer den Membranfederzungen 10 angeordnet, der dazu ausgelegt ist, den Anlaufdurchmesserunterschied zu überbrücken.

Figur 2 zeigt in vergrößerter Darstellung den Bereich der Membranfederzungen 10 und den daran angebrachten Anlaufteller 12. Wie Figur 2 zu entnehmen ist, weist der Anlaufteller 12 ein Befestigungselement 14 auf, das die Membranfederzunge 10 radial innen umgreift und sich hinter der Membranfederzunge 10 von radial innen nach radial außen erstreckt.

Dadurch, dass die Membranfederzungen 10 von radial innen von den Befestigungselementen 14 umfasst werden, wird ein Verklemmen der Membranfederzungen 10 an dem Anlaufteller 12 vermieden.

Figur 3 zeigt ein erstes bevorzugtes Ausführungsbeispiel für einen derartigen Anlaufteller 12 in schematischer räumlicher Darstellung. Wie Figur 3 zu entnehmen ist, weist der Anlaufteller 12 eine Anlaufscheibe 16 auf und radial innen ausgeformte Befestigungselemente 14, die die Membranfederzungen 10 umgreifen können. Der Anlaufteller 16 bietet auf seiner den angeformten Befestigungselementen 14 abgewandten Seite eine ebene Anlauffläche für das Kupplungsbetätigungselement.

Des Weiteren sind in Figur 3 Verdrehsicherungen 18 dargestellt, die in ihrer Dimensionierung dazu ausgelegt sind, zwischen die Membranfederzungen 10 einzugreifen und somit den Anlaufteller 12 drehfest an der Membranfeder 4 festzulegen. Wie Figur 3 ebenfalls zu entnehmen ist, ist vorzugweise die Verteilung der Befestigungselemente 14 und der Verdrehsicherungen 18 gleichmäßig über den Umfang des Anlauftellers 12 ausgestaltet. Dadurch kann sichergestellt werden, dass die Krafteinwirkung auf die Befestigungselemente 14 bzw. die Verdrehsicherungen 18 gleichmäßig ist, so dass nicht eines der Elemente übermäßig belastet wird.

Figur 4 zeigt ein weiteres bevorzugtes Ausführungsbeispiel für einen Anlaufteller 12, bei dem die Befestigungselemente 14 integral als rinnenförmige Ringaufnahme 20 ausgebildet sind. Die rinnenförmige Ringaufnahme 20 erstreckt sich wiederum integral von der Anlaufscheibe 16 weg. Bei dieser Ausgestaltung des Anlauftellers 12 ist eine Herstellung aus Kunststoff besonders vorteilhaft, da dadurch die Reibung an dem Anlaufteller 12 verringert werden kann.

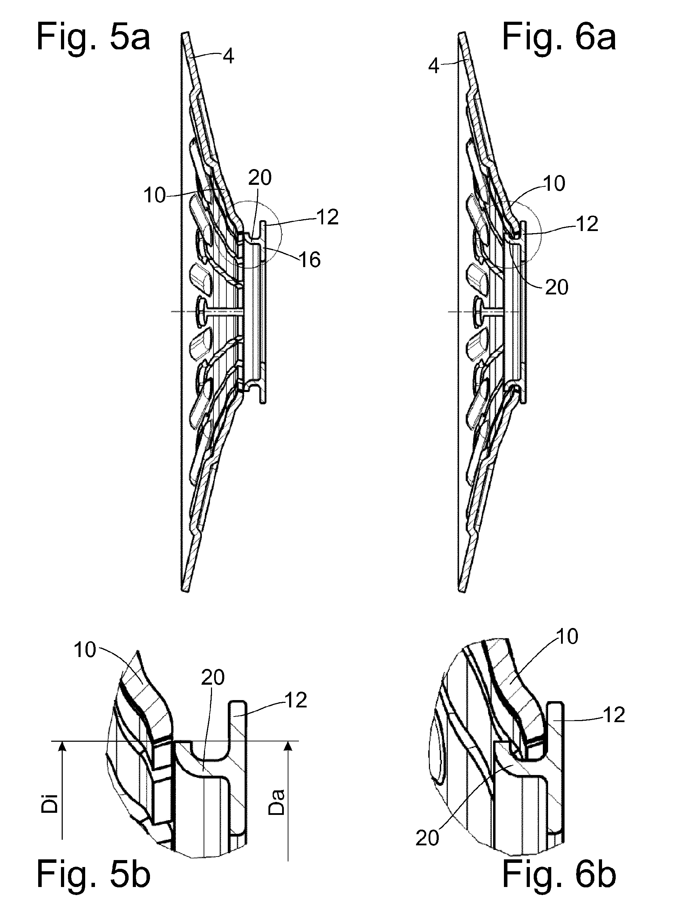

Des Weiteren ist der Außendurchmesser der rinnenförmigen Ringaufnahme 20 derart gewählt, dass er kleiner oder gleich einem Innendurchmesser der Membranfederzungen im entspannten Zustand ist. Die sich dadurch ergebende vorteilhafte Einbausituation ist schematisch in den Figuren 5 bis 7 visualisiert.

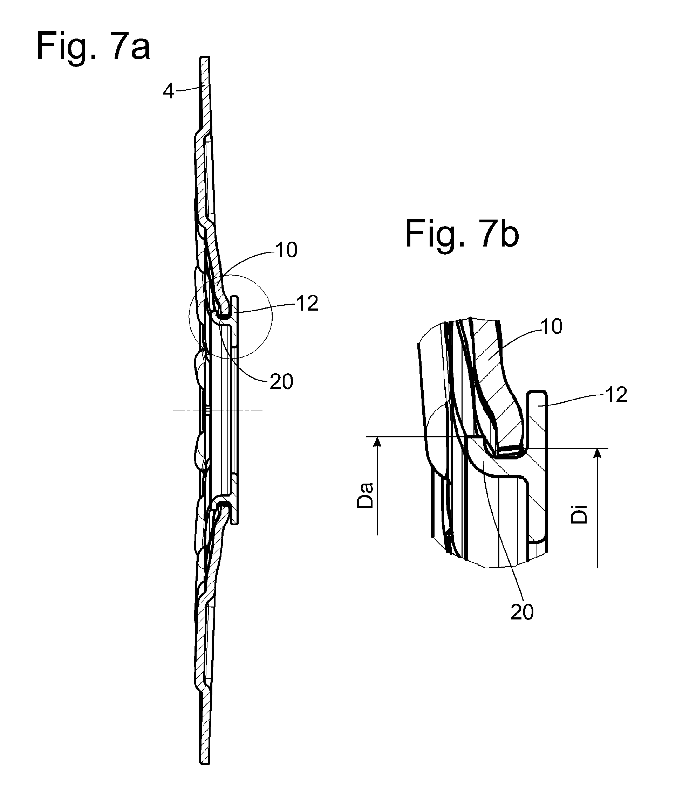

Figur 5 zeigt eine Schnittansicht durch eine Membranfeder 4 mit daneben angeordnetem Anlaufteller 12, Figur 6 zeigt schematisch eine Membranfeder-Anlaufteller-Baueinheit in entspanntem Zustand und Figur 7 zeigt die Membranfeder 4 mit Anlaufteller 12 im eingebauten und damit vorgespannten Zustand. In den Teilfiguren a wird dabei jeweils die Gesamtsituation dargestellt, während die Teilfigur b einen mit A gekennzeichneten Detailausschnitt vergrößert zeigt.

Figur 5a zeigt eine Membranfeder 4 im entspannten Zustand, wobei die Membranfederzungen 10 eine radiale innere Öffnung mit einem definierten Innendurchmesser Di aufweisen (siehe Figur 5b). Neben der Membranfeder 4 zeigt Figur 5a auch einen erfindungsgemäßen Anlaufteller 12, der im Begriff ist mit der Membranfeder 4 zusammengebaut zu werden. Der Anlaufteller 12 ist exemplarisch, wie in Figur 4 dargestellt, mit einer umlaufenden rinnenförmigen Ringaufnahme 20 und einer Anlaufscheibe 16 ausgestattet. Wie vergrößert in Figur 5b gezeigt, ist der äußere Durchmesser Da der rinnenförmigen Ringaufnahme 20 kleiner oder gleich dem Innendurchmesser Di der Membranfederzungen.

Dadurch dass der Innendurchmesser Di der Membranfederzungen 10 größer oder gleich dem Außendurchmesser Da der rinnenförmigen Ringaufnahme 20 ist, kann die rinnenförmige Aufnahme in die Membranfeder 4 eingeschoben werden. Eine derartige Membranfeder-Anlaufteller-Baueinheit ist in Figur 6a und 6b im entspannten Zustand gezeigt. Dabei sieht man deutlich, dass im entspannten Zustand der Anlaufteller 12 noch nicht verliersicher an der Membranfeder angeordnet ist, da die Befestigungselemente bzw. die Ringaufnahme noch nicht die Membranfederzungen 10 hintergreift (siehe insbesondere Fig. 6b).

Wird die Membranfeder 4 zwischen Gehäuse 2 und Anpressplatte 8 an der Reibungskupplung 1 befestigt, entsteht eine Vorspannung an der Membranfeder 4, die dazu führt, dass sich der Innendurchmesser Di der Membranfederzungen 10 verringert. Eine derartige Situation ist in Figur 7a und 7b dargestellt. In der vergrößerten Ansicht von Figur 7b sieht man, dass dadurch die Membranfederzunge 10 von der rinnenförmigen Ringaufnahme 20 hintergriffen wird, was dazu führt, dass der Anlaufteller 12 verliersicher mit der Membranfeder 4 verbunden ist.

Aufgrund der erfindungsgemäßen Ausgestaltung und der entsprechenden Dimensionierung des Anlauftellers 12, kann dieser einfach und schnell an der Membranfeder ohne zusätzliche Arbeitsschritte befestigt werden.

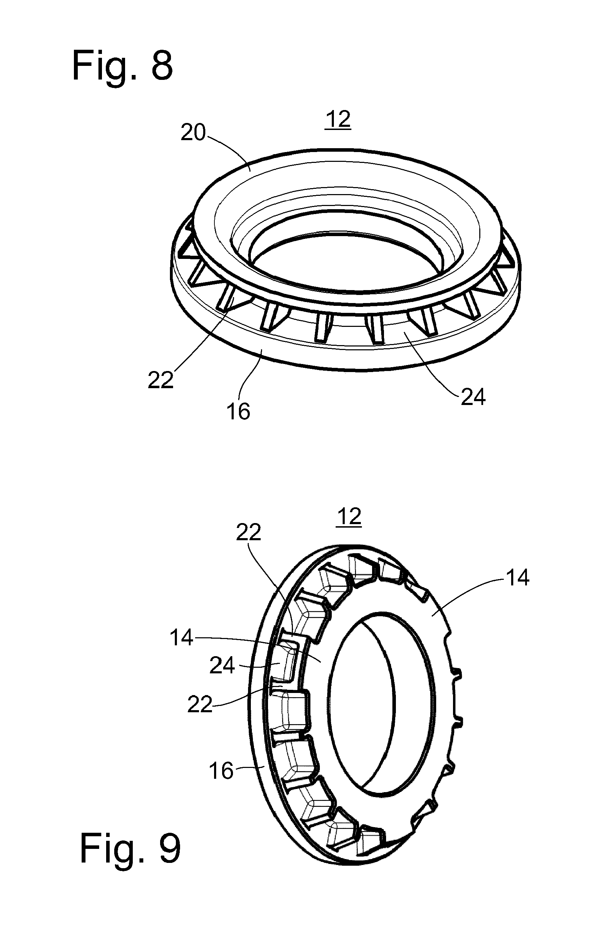

Des Weiteren kann der Anlaufteller 12 auch bei der rinnenförmigen Ringausgestaltung Trennelemente aufweisen, die eine Verdrehsicherung zwischen Anlaufteller 12 und Membranfeder 4 bereitstellen. Ein derartiges Ausführungsbeispiel ist in Figur 8 dargestellt. Wie dieser Figur zu entnehmen ist, sind zwischen der Anlaufscheibe 16 und der rinnenförmigen Ringaufnahme 20 innerhalb der Rinne Trennstege 22 ausgebildet, die zwischen sich Taschen 24 für die Aufnahme mindestens einer Membranfederzunge 10 definieren. Figur 8 zeigt eine Ausgestaltung mit einer so großen Anzahl von Taschen 24, dass jede Membranfederzunge 10 in einer ihr zugeordneten Tasche 24 aufgenommen werden kann. Selbstverständlich ist jedoch auch möglich, in einer Tasche 24 mehrere Membranfederzungen 10 aufzunehmen, oder nur für wenige Membranfederzungen derartige Taschen 24 vorzusehen.

Figur 9 zeigt ein weiteres bevorzugtes Ausführungsbeispiel eines erfindungsgemäßen Anlauftellers 12, bei dem keine ringförmige Aufnahme 20 vorhanden ist, die die Taschen 24 zwischen den Trennstegen 22 ausbildet, sondern selektiv an bestimmten Stellen die Stege 22 über ein speziell ausgebildetes deckelähnliches Befestigungselement 14 verfügen, das dazu ausgelegt ist, eine Membranfederzunge 10 zu hintergreifen und gleichzeitig eine Tasche 24 für eine Membranfederzunge 10 auszubilden. Dabei ist der durch die Befestigungselemente 14 gewählte Außendurchmesser wiederum derart eingestellt, dass die Membranfederzungen 10 nur im vorgespannten Zustand in die Taschen 24 hineinragen.

Auch in diesem Ausführungsbeispiel ist eine Gleichverteilung bevorzugt, um die Taschen 24 gleichmäßig mit Kraft zu beaufschlagen.

Vorzugsweise sind die Trennstege 22 derart dimensioniert, dass ein Verklemmen der Membranfederzungen an den Trennstegen 22 vermieden wird.

Insbesondere ist die Erfindung für Anlaufteller 12 vorteilhaft, die aus Kunststoff gefertigt sind, da zum einen die Reibung verringert wird, und aufgrund der speziellen Ausgestaltung des Anlauftellers 12 auch bei Verwendung von Kunststoff eine hohe Festigkeit erzielt werden kann.

Insgesamt ist vorteilhaft, dass bei dem erfindungsgemäßen Anlaufteller 12 eine einfache und schnelle, und fast automatische Befestigung des Anlauftellers 12 an der Membranfeder 4 während der Fertigung der Reibungskupplung ermöglicht wird. Des Weiteren wird ein Verklemmen der Membranfederzungen an den die Membranfederzungen seitlich umfassenden Befestigungselemente verhindert.

### Bezugszeichen

- 1: Reibungskupplung
- 2: Kupplungsgehäuse
- 4: Membranfeder
- 6: Bolzen
- 8: Anpressplatte
- 10: Membranfederzunge
- 12: Anlaufplatte
- 14: Befestigungselement
- 16: Anlaufscheibe
- 18: Verdrehsicherung
- 20: rinnenförmiges Ringelement
- 22: Trennstege
- 24: Tasche

## Patentansprüche

1. Anlaufteller (12) für eine gedrückte Reibungskupplung (1) zum Überbrücken eines Anlaufdurchmesserunterschieds zwischen einer Membranfederzungen (10) aufweisenden Membranfeder (4) einer Reibungskupplung (1) und einem auf die Membranfederzungen (10) drückend einwirkenden Kupplungsbetätigungselement, an dem mindestens ein erstes und ein zweites Befestigungselement (14; 20) angeordnet sind, die dazu ausgelegt sind, den Anlaufteller (12) verliersicher an der Membranfeder (4) festzulegen, **dadurch gekennzeichnet, dass** das erste und das zweite Befestigungselement (14; 20) dazu ausgelegt sind, mindestens eine erste und eine zweite Membranfederzunge (10) der Membranfeder (4) an ihrem radial inneren Rand zu umgreifen, und sich hinter den Membranfederzunge (10) von radial innen nach radial außen zu erstrecken.

2. Anlaufteller (12), nach Anspruch 1, wobei ein zwischen der radialen äu-βersten Erstreckung des ersten Befestigungselements (14) und der radialen äußersten Erstreckung des zweiten Befestigungselements (14) definierter Außendurchmesser (Da) dazu ausgelegt ist, kleiner oder gleich einem durch die radial inneren Enden der Membranfederzungen (10) definierten Innendurchmesser (Di) der Membranfeder (4) im entspannten Zustand zu sein.

3. Anlaufteller (12) nach Anspruch 1 oder 2, wobei der Anlaufteller (12) weiterhin eine Anlaufscheibe (16) aufweist, die einen auf einen Durchmesser eines Kupplungsbetätigungselements dimensionierten Innendurchmesser und einen auf einen Durchmesser einer Membranfeder (4) definierten Außendurchmesser hat, an der die Befestigungselemente (14; 20) befestigt sind.

4. Anlaufteller (12) nach Anspruch 2 oder 3, wobei die Anlaufscheibe weiterhin mindestens eine Verdrehsicherung (18) zum verdrehsicheren Montieren des Anlauftellers (12) an der Membranfeder (4) aufweist.

5. Anlaufteller (12) nach Anspruch 4, wobei die Verdrehsicherung (18) als mindestens ein Zapfenelement ausgebildet ist, das dazu ausgelegt ist, zwischen zwei Membranfederzungen (10) aufgenommen zu werden, wobei vorzugsweise das mindestens eine Zapfenelement radial außen an der Anlaufscheibe (16) angeordnet ist.

6. Anlaufteller (12) nach Anspruch 4 oder 5, wobei mindestens eines der Befestigungselemente (14) mit zwei Verdrehsicherungen (18) derart in Wirkverbindung steht, dass eine, mindestens eine Membranfederzunge (10) aufnehmende Tasche (24) ausgebildet ist.

7. Anlaufteller (12) nach einem der vorhergehenden Ansprüche, wobei die Befestigungselemente (14) und/oder die Verdrehsicherungen (18) umfänglich gleichverteilt angeordnet sind.

8. Anlaufteller (12) nach einem der vorhergehenden Ansprüche, wobei das erste und das zweite Befestigungselement (14; 20) integral als eine umlaufende, rinnenförmige Ringaufnahme (20) ausgebildet sind, wobei vorzugsweise die Rinne der Ringaufnahme (20) dazu ausgelegt ist, die Membranfederzungen (10), insbesondere die Enden der Membranfederzungen (10), aufzunehmen.

9. Anlaufteller (12) nach Anspruch 8, wobei die Ringaufnahme (20) mindestens ein Trennelement (22) aufweist, das dazu ausgelegt ist, als Verdrehsicherung (18) zwischen zwei Membranfederzungen (10) aufgenommen zu sein.

10. Anlaufteller (12) nach Anspruch 9, wobei mindestens zwei Trennelemente (22) vorgesehen sind, die mindestens eine zur Aufnahme einer Membranfederzunge (10) ausgebildete Tasche (24) ausbilden, wobei vorzugsweise die Taschen (24) gleichmäßig über den Umfang verteilt sind und/oder wobei vorzugsweise für jede Membranfederzunge (10) eine Tasche (24) vorgesehen ist.

11. Anlaufteller (12) nach einem der vorhergehenden Ansprüche, wobei der Anlaufteller (12) zumindest teilweise aus Kunststoff gefertigt ist.

12. Membranfeder-Anlaufteller-Baueinheit mit einer Membranfeder (4), die dazu ausgelegt ist, an einer Reibungskupplung (1), insbesondere für ein Kraftfahrzeug, montiert zu werden, und einem Anlaufteller (12) nach einem der vorhergehenden Ansprüche.

13. Reibungskupplung (1), insbesondere für ein Kraftfahrzeug, mit einer Membranfeder (4) mit mehreren Membranfederzungen (10), die dazu ausgelegt ist, durch Druck auf die Membranfederzungen (10) die Reibungskupplung (1) auszurücken, und mit einem Kupplungsbetätigungselement, das dazu ausgelegt ist, einen Druck auf die Membranfeder (4) auszuüben, wobei der Innendurchmesser der Membranfeder (4) größer ist als der Außendurchmesser des Kupplungsbetätigungselements, und wobei weiterhin ein Anlaufteller (12) zum Überbrücken des Durchmesserunterschieds zwischen der Membranfeder (4) und dem Kupplungsbetätigungselement nach einem der Ansprüche 1 bis 11 an der Membranfeder (4) angeordnet ist oder eine Membranfeder-Anlaufteller (12)-Baueinheit nach Anspruch 12 vorhanden ist .

14. Reibungskupplung (1) nach Anspruch 13, wobei das erste und das zweite Befestigungselement (14; 20) in Betätigungsrichtung des Kupplungsbetätigungselements die Membranfederzungen (10) hintergreift.

15. Verfahren zum Fertigen einer Reibungskupplung (1) nach Anspruch 13 oder 14, **dadurch gekennzeichnet, dass** bei der Montage der Schritt des Anbringens des Anlauftellers (12) an der Membranfeder (4) vor dem Schritt des Anbringens der Membranfeder (4) an der Reibungskupplung (1) erfolgt.

16. Verfahren nach Anspruch 15, wobei die Membranfeder (4) als vorgefertigte Membranfeder-Anlaufteller-Baueinheit gemäß Anspruch 12 an der Reibungskupplung (1) befestigt wird.
